# EUROPEAN PATENT SPECIFICATION

(11) **EP 3 683 288 B1**
(45) Date of publication and mention of the grant of the patent: **07.06.2023**
(21) Application number: 18855345.7
(22) Date of filing: 23.08.2018
(51) Int. Cl.: C09K 21/12, C08K 3/22, C08K 3/26, C08K 5/3492, C08K 5/3462, C08L 75/08

(54) **COMPOSITION AND FLAME RETARDANT RESIN COMPOSITION**
ZUSAMMENSETZUNG UND FLAMMHEMMENDE HARZZUSAMMENSETZUNG
COMPOSITION, ET COMPOSITION DE RÉSINE SYNTHÉTIQUE IGNIFUGE

(30) Priority: 12.09.2017 JP 2017175227
(43) Date of publication of application: 22.07.2020
(73) Proprietor: Adeka Corporation, Tokyo 116-8554 (JP)
(72) Inventor: NI, Yang, Saitama-shi Saitama 336-0022 (JP); INAGAKI, Yohei, Saitama-shi Saitama 336-0022 (JP); YONEZAWA, Yutaka, Saitama-shi Saitama 336-0022 (JP); TANJI, Naoko, Saitama-shi Saitama 336-0022 (JP)
(74) Representative: Forstmeyer, Dietmar
(86) International application number: PCT/JP2018/031225
(87) International publication number: WO 2019/054155

(56) References cited:
- WO-A1-2007/108202
- WO-A1-2012/161070
- WO-A1-2015/025658
- JP-A- 2002 338 756
- JP-A- 2009 046 682
- JP-A- 2009 120 717
- JP-A- 2013 124 340
- JP-A- 2014 500 336

## Description

### Technical Field

The present invention relates to a composition that contains an amine phosphate and melamine cyanurate, and a flame retardant resin composition that contains the composition.

### Background Art

Synthetic resins have conventionally been used in a wide variety of applications such as construction materials, automobile parts, wrapping materials, agricultural materials, housing materials for household appliances, and toys due to their excellent chemical and mechanical properties. However, most synthetic resins are flammable substances, and thus they are required to be flame retardant depending on the application of the synthetic resins. As a method for imparting flame retardancy to a resin, a method is widely known in which a halogen-based flame retardant agent, an inorganic phosphorus-based flame retardant agent (as typified by red phosphorus or a polyphosphoric acid-based flame retardant agent such as ammonium polyphosphate), an organic phosphorus-based flame retardant agent (as typified by a triaryl phosphate ester compound), a metal hydroxide, and an antimony oxide compound and a melamine compound that are flame retardant aids are used alone or in combination.

In particular, an intumescent-based flame retardant agent is known that is composed mainly of polyphosphoric acid or pyrophosphoric acid and a salt of a nitrogen-containing compound and forms a surface swelling layer (intumescent layer) during combustion to suppress diffusion of decomposition products and heat transfer and thereby exhibit flame retardancy. Such a flame retardant agent is disclosed in Patent Literature 1, for example.

Patent Literature 2 discloses a flame retardant agent containing a phosphorus compound and a reaction product of melamine and cyanuric acid. This flame retardant agent contains approximately 20 mass% of melamine cyanurate, and is problematic from the viewpoint of deterioration in resin physical properties and economic efficiency.

Patent Literature 3 discloses a flame retardant resin composition that contains melamine cyanurate subjected to surface treatment using a coupling agent. This flame retardant resin composition contains approximately 10 mass% of melamine cyanurate subjected to surface treatment with respect to the resin, and is problematic from the viewpoint of deterioration in mechanical properties and economic efficiency.

Patent Literature 4 discloses a flame retardant resin composition obtained by adding magnesium hydroxide and silicone polymer that are inorganic substances, and melamine cyanurate to a polyolefin-based resin. However, this flame retardant resin composition contains approximately 30 mass% of melamine cyanurate as a flame retardant agent, and the total amount of the inorganic substances is approximately 70 mass%, and thus the flame retardant resin composition is problematic from the viewpoint of not only flame retardancy but also processability and surface smoothness of a molded article.

### Citation List

### Patent Literature

Patent Literature 1: US 2014/200292A1 and WO 2012/161070 A1
Patent Literature 2: WO 2014/080821A1
Patent Literature 3: JP 2003-226798A
Patent Literature 4: JP 2000-178386A

WO 2015/025658 A1 discloses a flame retardant composition for synthetic resins, and a flame retardant synthetic resin composition including the flame retardant composition. JP 2009 120717 A discloses a flame retardant composition having improved processability, a flame retardant synthetic resin composition and a shaped article thereof.

### Summary of Invention

There is increasing demand for fire protection in various applications where resin materials are used. Along with this trend, resin compositions are required to have higher levels of flame retardancy.

However, conventional flame retardant agents described above are insufficient in terms of achieving a drip prevention effect.

It is an object of the present invention to provide a composition that can impart a drip prevention effect and excellent flame retardancy to a resin by being mixed with the resin, and a flame retardant resin composition that contains the composition and a resin and exhibits excellent flame retardancy.

The inventors of the present invention conducted in-depth studies on a configuration that solves the problems described above, and found that, when a composition that contains an amine phosphate and melamine cyanurate in combination is mixed with a resin, the composition exhibits excellent surface smoothness and a drip prevention effect.

The present invention has been made based on the findings described above, and provides a composition that contains an amine phosphate (A) and melamine cyanurate (B).

The present invention also provides a flame retardant resin composition that contains a resin and the composition described above, and a molded body that is formed from the flame retardant resin composition.

Also, the present invention provides a method for imparting flame retardancy to a resin, the method including mixing a composition that contains the above-described components (A) and (B) with a resin.

Furthermore, the present invention provides use of a composition that contains the above-described components (A) and (B) as a flame retardant agent.

### Description of Embodiments

Hereinafter, the present invention will be described in detail by way of a preferred embodiment thereof.

The term "flame retardancy" used in the description given below refers to the property of a substance being difficult to ignite, or being capable of ignition but causing a flame to spread at a very low speed even when combustion continues, and thereafter being capable of self-extinguishment, and is preferably of a rating of at least V-2, and more preferably of a rating of V-1 or V-0 in flammability rating according to the UL-94V standard as described in Examples. The term "flame retardant agent composition" refers to a composition that contains one or more flame retardant agents. The term "flame retardant resin composition" refers to a composition that has the flame retardancy described above, and contains at least one synthetic resin.

A feature of the composition according to the present invention is that the composition contains all of the above-described components (A) and (B).

First, an amine phosphate, which is a component (A) contained in the composition of the present invention, will be described. An amine phosphate is a salt of phosphoric acid and an amine.

In the present invention, phosphoric acid means acid obtained by hydrating diphosphorus pentoxide, and specific examples of the phosphoric acid include orthophosphoric acid, pyrophosphoric acid, and polyphosphoric acid. These phosphoric acids may be used alone or in a combination of two or more.

There is no particular limitation on the amine, and specific examples thereof include aromatic amine and heterocyclic aliphatic amine. These amines may be used alone or in a combination of two or more.

An aromatic amine is, for example, a compound in which one or at least two amino groups bind to an aromatic hydrocarbon ring. One or at least two carbon atoms in the aromatic hydrocarbon ring may be substituted with, for example, hetero atoms such as nitrogen, oxygen, or sulfur atoms. Examples of aromatic amines in which one or at least two amino groups bind to an aromatic hydrocarbon ring include aniline and phenylenediamine. Meanwhile, examples of aromatic amines in which one or at least two carbon atoms in the aromatic hydrocarbon ring are substituted with hetero atoms include aminopyridine, which is a compound having one nitrogen atom as a hetero atom, aminopyrazine, which is a compound having two nitrogen atoms as hetero atoms, and aminotriazine, which is a compound having three nitrogen atoms as hetero atoms. In particular, it is preferable to use aminotriazine, which is a compound having three nitrogen atoms as hetero atoms, and it is more preferable to use melamine, which is triazine having three amino groups.

Examples of heterocyclic aliphatic amines include 5-membered ring heterocyclic aliphatic amines and 6-membered ring heterocyclic aliphatic amines.

Examples of 5-membered ring heterocyclic aliphatic amines include a 5-membered ring heterocyclic aliphatic amine containing one nitrogen atom and a 5-membered ring heterocyclic aliphatic amine containing two nitrogen atoms. Examples of 5-membered ring heterocyclic aliphatic amines containing one nitrogen atom include pyrrolidine. Examples of 5-membered ring heterocyclic aliphatic amines containing two nitrogen atoms include pyrazolidine. Meanwhile, examples of 6-membered ring heterocyclic aliphatic amines include 6-membered ring heterocyclic aliphatic amine containing one nitrogen atom and 6-membered ring heterocyclic aliphatic amine containing two nitrogen atoms. Examples of 6-membered ring heterocyclic aliphatic amines containing one nitrogen atom include piperidine. Examples of 6-membered ring heterocyclic aliphatic amines containing two nitrogen atoms include piperazine. In the present invention, as heterocyclic amine, it is preferable to use 6-membered ring heterocyclic aliphatic amine containing two nitrogen atoms, and it is more preferable to use piperazine.

In the composition of the present invention, the amine phosphate used as the component (A) contains a component (A-1): at least one melamine salt selected from the group consisting of melamine orthophosphate, melamine pyrophosphate, and melamine polyphosphate, and a component (A-2): at least one piperazine salt selected from the group consisting of piperazine orthophosphate, piperazine pyrophosphate, and piperazine polyphosphate.

In the composition of the present invention, the melamine salt used as the component (A-1) is selected from the group consisting of melamine orthophosphate, melamine pyrophosphate, and melamine polyphosphate. These melamine salts may be used alone or in a combination of two or more. Out of these, it is preferable to use melamine pyrophosphate from the viewpoint of flame retardancy, ease of handling, and storage stability. In the case where the melamine salt is used in a mixture, it is preferable that the mass-based content of melamine pyrophosphate is the highest in the mixture.

Such a salt of phosphoric acid and melamine can be obtained by reacting a corresponding phosphoric acid or phosphate salt with melamine. In particular, the melamine salt used as the component (A-1) of the present invention is preferably melamine pyrophosphate or melamine polyphosphate, more preferably melamine pyrophosphate obtained by heating and condensing melamine orthophosphate.

The piperazine salt used as the component (A-2) in the composition according to the present invention is selected from the group consisting of piperazine orthophosphate, piperazine pyrophosphate, and piperazine polyphosphate. These piperazine salts may be used alone or in a combination of two or more. Out of these, from the viewpoint of flame retardancy, ease of handling, and storage stability, it is preferable to use piperazine pyrophosphate. In the case where the piperazine salt is used in a mixture, it is preferable that the mass-based content of piperazine pyrophosphate is the highest in the mixture.

Such a salt of phosphoric acid and piperazine can be obtained by reacting a corresponding phosphoric acid or phosphate salt with piperazine. In particular, the piperazine salt used as the component (A-2) of the present invention is preferably piperazine pyrophosphate or piperazine polyphosphate, more preferably piperazine pyrophosphate obtained by heating and condensing piperazine orthophosphate.

The component (A) contained in the composition of the present invention is preferably composed only of the components (A-1) and (A-2). In this case, the amount of component (A-1) in the component (A) is preferably from 10 to 50 parts by mass, and more preferably from 20 to 50 parts by mass, relative to 100 parts by mass of the component (A). The amount of component (A-2) in the component (A) is preferably from90 to 50 parts by mass, and more preferably from 80 to 50 parts by mass, relative to 100 parts by mass of the component (A).

Also, in the composition according to the present invention, the total amount of component (A) is preferably from 70 to 99.9 mass%, and more preferably from 80 to 99 mass%. The amount of component (A) is preferably 70 mass% or more from the viewpoint of improving the drip-related effect, and is preferably 99.9 mass% or less from the viewpoint of ensuring an amount for other optional components and enhancing the effects of the present invention. The amount of amine phosphate, which is a component (A) typified by a melamine salt that is the component (A-1) and a piperazine salt that is the component (A-2), can be measured using ion chromatography.

Next, the component (B) of the composition of the present invention will be described.

Melamine cyanurate, which is the component (B) in the composition of the present invention, is an organic salt of melamine and cyanuric acid.

Commercially available products may be used as melamine cyanurate. Examples of the commercially available products of melamine cyanurate include MC-4000, MC-4500, and MC-6000 available from Nissan Chemical Industries, Ltd.

Examples of the method for producing melamine cyanurate include known methods. For example, those disclosed in JP H7-188193A and JP H7-149739A can be used.

In the composition according to the present invention, the amount of component (B) is preferably from 0.1 to 20 parts by mass relative to 100 parts by mass of the component (A). From the viewpoint of flame retardancy, the amount of component (B) is preferably from 0.5 to 20 parts by mass, more preferably from 1 to 20 parts by mass, and even more preferably from 3 to 10 parts by mass. It is advantageous to set the amount of component (B) to 0.1 parts by mass or more from the viewpoint of a drip prevention effect and an intumescent layer forming effect. On the other hand, from the viewpoint of machine contamination during processing and processability/moldability, it is advantageous to set the amount of component (B) to 20 parts by mass or less.

In the composition of the present invention, the amount of component (B) can be measured using, for example, infrared spectroscopy, gas chromatography, gas chromatography-mass spectrometry, or the like.

The composition according to the present invention may further contain zinc oxide (ZnO) (hereinafter, this component may also be referred to as "component (C)").

Zinc oxide functions as a flame retardant aid. Zinc oxide may be surface treated. Commercially available products of zinc oxide can be used. Examples thereof include zinc oxide class 1 (available from Mitsui Mining & Smelting Co., Ltd.), partially coated zinc oxide (available from Mitsui Mining & Smelting Co., Ltd.), Nano Fine 50 (super-fine zinc oxide particles with an average particle size of 0.02 µm available from Sakai Chemical Industry Co., Ltd.), Nano Fine K (super-fine zinc oxide particles coated by zinc silicate with an average particle size of 0.02 µm available from Sakai Chemical Industry Co., Ltd.), and the like.

From the viewpoint of flame retardancy, in the composition according to the present invention, the amount of zinc oxide that is the component (C) is preferably from 0.01 to 10 parts by mass, more preferably from 0.5 to 8 parts by mass, and even more preferably from 1 to 5 parts by mass relative to 100 parts by mass of the component (A). By setting the amount of zinc oxide to 0.01 parts by mass or more, flame retardancy is further improved. On the other hand, by setting the amount of zinc oxide to 10 parts by mass or less, processability is unlikely to be negatively affected.

The composition according to the present invention preferably further contains at least one (component (D)) selected from silicone oil, an epoxy-based coupling agent, a hydrotalcite, and a lubricant from the viewpoint of preventing aggregation of flame retardant agent powder, as well as improving storage stability, dispersibility to synthetic resin, and flame retardancy.

Examples of silicone oil include: dimethyl silicone oil in which all side chains and terminals of polysiloxane are methyl groups; methyl phenyl silicone oil in which side chains and terminals of polysiloxane are methyl groups and some of the side chains are phenyl groups; methyl hydrogen silicone oil in which side chains and terminals of polysiloxane are methyl groups and some of the side chains are hydrogen; and copolymers thereof. It is also possible to use modified silicone oil modified by introducing an organic group to some of the side chains and/or the terminals of silicone oil. Examples thereof include amine-modified silicone oil, epoxy-modified silicone oil, alicyclic epoxy-modified silicone oil, carboxyl-modified silicone oil, carbinol-modified silicone oil, mercapto-modified silicone oil, polyether-modified silicone oil, long-chain alkyl-modified silicone oil, fluoroalkyl-modified silicone oil, higher-fatty acid ester-modified silicone oil, higher-fatty acid amide-modified silicone oil, silanol-modified silicone oil, diol-modified silicone oil, phenol-modified silicone oil, and/or aralkyl-modified silicone oil.

Specific examples of silicone oil are as follows. As dimethyl silicone oil, examples include KF-96 (available from Shin-Etsu Chemical Co., Ltd.), KF-965 (available from Shin-Etsu Chemical Co., Ltd.), KF-968 (available from Shin-Etsu Chemical Co., Ltd.), and the like. As methyl hydrogen silicone oil, examples include KF-99 (available from Shin-Etsu Chemical Co., Ltd.), KF-9901 (available from Shin-Etsu Chemical Co., Ltd.), HMS-151 (available from Gelest Inc.), HMS-071 (available from Gelest Inc.), HMS-301 (available from Gelest Inc.), DMS-H21 (available from Gelest Inc.), and the like. Examples of methyl phenyl silicone oil include KF-50 (available from Shin-Etsu Chemical Co., Ltd.), KF-53 (available from Shin-Etsu Chemical Co., Ltd.), KF-54 (available from Shin-Etsu Chemical Co., Ltd.), KF-56 (available from Shin-Etsu Chemical Co., Ltd.), and the like. Examples of epoxy-modified products include X-22-343 (available from Shin-Etsu Chemical Co., Ltd.), X-22-2000 (available from Shin-Etsu Chemical Co., Ltd.), KF-101 (available from Shin-Etsu Chemical Co., Ltd.), KF-102 (available from Shin-Etsu Chemical Co., Ltd.), and KF-1001 (available from Shin-Etsu Chemical Co., Ltd.). Examples of carboxyl-modified products include X-22-3701E (available from Shin-Etsu Chemical Co., Ltd.). Examples of carbinol-modified products include X-22-4039 (available from Shin-Etsu Chemical Co., Ltd.), and X-22-4015 (available from Shin-Etsu Chemical Co., Ltd.). Examples of amine-modified products include KF-393 (available from Shin-Etsu Chemical Co., Ltd.), and the like.

In the composition according to the present invention, from the viewpoint of preventing aggregation of flame retardant agent powder, as well as improving storage stability and dispersibility to synthetic resin, out of the silicone oils, it is preferable to use methyl hydrogen silicone oil.

The epoxy-based coupling agent functions to prevent aggregation of flame retardant agent powder, improve storage stability, and impart water resistance and heat resistance. As the epoxy-based coupling agent, a compound that is represented by, for example, the general formula: A-(CH₂)ₖ-Si(OR)₃ and has an epoxy group can be used. In the formula, A represents an epoxy group, k is a number of 1 to 3, and R represents a methyl group or an ethyl group. The epoxy group as used herein may be a glycidoxy group or a 3,4-epoxycyclohexyl group.

Specific examples of the epoxy-based coupling agent include, as silane coupling agents that have an epoxy group, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, glycidoxyoctyltrimethoxysilane, and the like.

Hydrotalcite, which is known as a natural product or a synthetic product, is a complex salt compound composed of magnesium, aluminum, hydroxyl groups, carbonate groups, and any crystal water. Examples of hydrotalcite include a hydrotalcite in which a portion of magnesium or aluminum is replaced with an alkali metal or another metal such as zinc, and a hydrotalcite in which hydroxyl groups and carbonate groups are replaced with other anion groups. Specific examples include a hydrotalcite represented by the following formula (3), and a hydrotalcite obtained by replacing the metals of the hydrotalcite represented by the following formula (3) with alkali metals. As Al-Li-based hydrotalcite, a compound represented by formula (4) can also be used.
[Chem. 1]

*Mg*_{*x*1}*Zn*_{*x*2}*Al*₂(*OH*)_{2(*x*1+*x*2)+4}(*CO*₃) · *pH*₂*O* (3)

where x₁ and x₂ represent numbers that satisfy 0 ≤ x₂ / x₁ < 10 and 2 ≤ x₁ + x₂ ≤ 20, and p represents 0 or a positive number.
[Chem. 2]

[*Li*_{1/3}*Al*_{2/3}(*OH*)₂][*A*^{*q*-}_{1/3*q*} • *pH*₂*O*] (4)

where A^{q-} represents a q-valent anion, and p represents 0 or a positive number.

Also, a portion of carbonate anions in the hydrotalcite may be replaced with other anions.

The hydrotalcite may be a hydrotalcite whose crystal water has been removed, or may be a hydrotalcite coated with a higher fatty acid such as stearic acid, a metal salt of a higher fatty acid such as an alkali metal salt of oleic acid, an organic metal salt of a sulfonic acid such as an alkali metal salt of dodecylbenzenesulfonic acid, a higher fatty acid amide, a higher fatty acid ester, wax, or the like.

Examples of lubricants include: pure hydrocarbon-based lubricants such as liquid paraffin, natural paraffin, micro wax, synthetic paraffin, low molecular weight polyethylene, and polyethylene wax; halogenated hydrocarbon-based lubricants; fatty acid-based lubricants such as a higher fatty acid and a hydroxy fatty acid; fatty acid amide-based lubricants such as a fatty acid amide and a bis-fatty acid amide; ester-based lubricants including lower alcohol esters of fatty acids, polyalcohol esters of fatty acids such as glyceride, polyglycol esters of fatty acids, and fatty alcohol esters of fatty acids (ester wax); metallic soap, fatty alcohols, polyalcohols, polyglycols, polyglycerols, partial ester-based lubricants such as partial esters of fatty acids and polyalcohols, partial esters of fatty acids, polyglycols and polyglycerols, silicone oil, mineral oil, and the like. These lubricants can be used alone or in a combination of two or more.

In the case where the composition according to the present invention further contains at least one (component (D)) selected from silicone oil, an epoxy-based coupling agent, a hydrotalcite, and a lubricant from the viewpoint of improving flame retardancy, the amount of component E in the composition according to the present invention is preferably from 0.01 to 5 parts by mass, and more preferably from 0.01 to 3 parts by mass relative to 100 parts by mass of the component (A) from the viewpoint of effectively exhibiting the effect produced by inclusion of the component E.

In particular, in the case where silicone oil is contained in the composition of the present invention, the amount of silicone oil is preferably from 0.01 to 3 parts by mass, and more preferably from 0.1 to 1 part by mass relative to 100 parts by mass of the component (A) from the viewpoint of enhancing the above-described effect produced by the inclusion of silicone oil.

In particular, in the case where an epoxy-based coupling agent is contained in the composition according to the present invention, the amount of epoxy-based coupling agent is preferably from 0.01 to 3 parts by mass, and more preferably from 0.1 to 1 part by mass relative to 100 parts by mass of the component (A) from the viewpoint of enhancing the above-described effect produced by the inclusion of the epoxy-based coupling agent.

In particular, in the case where a hydrotalcite is contained in the composition according to the present invention, the amount of hydrotalcite is preferably from 0.01 to 5 parts by mass, and more preferably from 0.1 to 0.5 parts by mass relative to 100 parts by mass of the component (A) from the viewpoint of enhancing the above-described effect produced by including the hydrotalcite.

In the case where a lubricant is contained in the composition according to the present invention, the amount of lubricant is preferably from 0.01 to 3 parts by mass, and more preferably from 0.1 to 0.5 parts by mass relative to 100 parts by mass of the component (A) from the viewpoint of enhancing the above-described effect produced by including the lubricant.

The composition used in the present invention may optionally contain a phenol-based antioxidizing agent, a phosphite-based antioxidizing agent, a thioether-based antioxidizing agent, other antioxidizing agents, a nucleating agent, an ultraviolet absorbing agent, a light stabilizing agent, a plasticizing agent, a filler, a fatty acid metal salt, an antistatic agent, a pigment, a dye, and the like.

These components may be blended with the composition according to the present invention in advance, or may be blended with a synthetic resin when the synthetic resin is blended. It is preferable to blend these components because the synthetic resin is stabilized.

Examples of the phenol-based antioxidizing agent include 2,6-di-tert-butyl-4-methylphenol, 2,6-di-tert-butyl-4-ethylphenol, 2-tert-butyl-4,6-dimethylphenol, styrenated phenol, 2,2'-methylenebis(4-ethyl-6-tert-butylphenol), 2,2'-thiobis-(6-tert-butyl-4-methylphenol), 2,2'-thiodiethylenebis[3-(3,5-di-tert-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-tert-butyl-4-hydroxyphenyl)propionate, N,N'-hexane-1,6-diylbis[3-(3,5-di-tert-butyl-4-hydroxyphenyl)propionamide, 2,2'-oxamide-bis[ethyl-3-(3,5-di-tert-butyl-4-hydroxyphenyl)propionate], 2-ethylhexyl-3-(3',5'-di-tert-butyl-4'-hydroxyphenyl)propionate, 2,2'-ethylenebis(4,6-di-tert-butylphenol), 3,5-di-tert-butyl-4-hydroxy-benzenepropionic acid and C₁₃₋₁₅ alkyl esters, 2,5-di-tert-amylhydroquinone, hindered phenol polymer (product name AO.OH.98 available from Adeka Palmarole Sas), 2,2'-methylenebis[6-(1-methylcyclohexyl)-p-cresol], 2-tert-butyl-6-(3-tert-butyl-2-hydroxy-5-methylbenzyl)-4-methylphenylacrylate, 2-[1-(2-hydroxy-3,5-di-tert-pentyl phenyl)ethyl]-4,6-di-tert-pentyl phenyl acrylate, 6-[3-(3-tert-butyl-4-hydroxy-5-methyl)propoxy]-2,4,8,10-tetra-tert-butylbenz [d,f][1,3,2]-dioxaphosphobin, hexamethylenebis[3-(3,5-di-tert-butyl-4-hydroxyphenyl)propionate, bis[monoethyl(3,5-di-tert-butyl-4-hydroxybenzyl)phosphonate] calcium salt, a reaction product of 5,7-bis(1,1-dimethylethyl)-3-hydroxy-2(3H)-benzofuranone and o-xylene, 2,6-di-tert-butyl-4-(4,6-bis(octylthio)-1,3,5-triazine-2-ylamino)phenol, DL-a-tocopherol (vitamin E), 2,6-bis(α-methylbenzyl)-4-methylphenol, bis[3,3-bis-(4'-hydroxy-3'-tert-butyl-phenyl) butanoic acid]glycol ester, 2,6-di-tert-butyl-p-cresol, 2,6-diphenyl-4-octadecyloxy phenol, stearyl(3,5-di-tert-butyl-4-hydroxyphenyl)propionate, distearyl(3,5-di-tert-butyl-4-hydroxybenzyl)phosphonate, tridecyl-3,5-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis [3,3 -bi s(4-hydroxy-3 -tert-butyl phenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butyl phenyl) butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate] methane, 2-tert-butyl-4-methyl-6-(2-acryloyloxy-3-tert-butyl-5-methylbenzyl)phenol, 3,9-bis[2-[3-(3-tert-butyl-4-hydroxy-5-methylphenyl)propanoyloxy]-1,1-dimethylethyl]-2,4,8,10 -tetraoxaspiro[5.5]undecane, triethylene glycolbis[3-tert-4-hydroxy-5-methylphenyl)propionate], stearyl -3 -(3, 5-di-tert-butyl -4-hydroxyphenyl)propionic acid amide, palmityl-3-(3,5-di-tert-butyl-4-hydroxyphenyl)propionic acid amide, myristyl-3-(3,5-di-tert-butyl-4-hydroxyphenyl)propionic acid amide, lauryl-3-(3,5-di-tert-butyl-4-hydroxyphenyl)propionic acid amide, other 3-(3,5-dialkyl-4-hydroxyphenyl)propionic acid derivatives, and the like. These phenol-based antioxidizing agents may be used alone or in a combination of two or more.

The amount of phenol-based antioxidizing agent used when blended with a resin is preferably from 0.001 to 5 parts by mass, and more preferably from 0.01 to 1.0 part by mass relative to 100 parts by mass of the flame retardant resin composition.

Examples of the phosphite-based antioxidizing agent include triphenyl phosphite, diisooctyl phosphite, heptakis(dipropylene glycol)triphosphite, tri-isodecyl phosphite, diphenylisooctyl phosphite, diisooctyl phenyl phosphite, diphenyl tridecyl phosphite, triisooctyl phosphite, trilauryl phosphite, diphenylphosphite, tris(dipropylene glycol)phosphite, di-isodecyl pentaerythritol diphosphite, dioleoyl hydrogen phosphite, trilauryltrithio phosphite, bis(tridecyl)phosphite, tris(isodecyl)phosphite, tris(tridecyl)phosphite, diphenyl decyl phosphite, dinonyl phenylbis(nonylphenyl)phosphite, poly(dipropylene glycol)phenylphosphite, tetraphenyldipropylene glycol diphosphite, tris nonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tri(decyl)phosphite, octyldiphenylphosphite, di(decyl)monophenylphosphite, distearylpentaerythritol diphosphite, a mixture of distearylpentaerythritol and stearic acid calcium salt, alkyl (C10) bisphenol A phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-tert-butyl-6-methylphenyl)ethylphosphite, tetra(tridecyl)isopropylidene diphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butyl phenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecylph osphite, 2,2'-methylenebis(4,6-di-tert-butylphenyl)-2-ethylhexylphosphite, 2,2'-methylenebis(4,6-di-tert-butylphenyl)-octadecylphosphite, 2,2'-ethylidenebis(4,6-di-tert-butylphenyl)fluorophosphite, 4,4'-butylidenebis(3-methyl-6-tert-butylphenylditridecyl)phosphite, tris(2-[(2,4,8,10-tetrakis-tert-butyldibenzo[d,f][1,3,2]dioxaphosphepin-6-yl)oxy]ethyl)amine, 3,9-bis(4-nonylphenoxy)-2,4,8,10-tetraoxa-3,9-diphosphesspiro[5,5]undecane, 2,4,6-tri-tert-butyl phenyl-2-butyl-2-ethyl-1,3-propanediol phosphite, 4,4'-isopropylidene diphenol C₁₂₋₁₅ alcohol phosphite, 3,9-bis(2,6-di-tert-butyl-4-methylphenyl)-3,9-bis-diphospha-2,4,8,10-tetraoxa-3,9-diphosphesspi ro[5,5]undecane, diphenyl(isodecyl)phosphite, biphenyl diphenyl phosphite, and the like. These phosphite-based antioxidizing agents can be used alone or in a combination of two or more.

The amount of phosphite-based antioxidizing agent used when blended with a resin is preferably from 0.001 to 5 parts by mass, and more preferably from 0.01 to 1.0 part by mass relative to 100 parts by mass of the flame retardant resin composition.

Examples of the thioether-based antioxidizing agent include 3,3'-thiodipropionic acid, alkyl (C₁₂₋₁₄) thiopropionic acid, di(lauryl)-3,3'-thiodipropionate, 3,3'-thiobis propinoic acid ditridecyl, di(myristyl)-3,3'-thiodipropionate, di(stearyl)-3,3'-thiodipropionate, di(octadecyl)-3,3'-thiodipropionate, lauryl stearylthiodipropionate, tetrakis[methylene-3-(dodecylthio)propionate]methane, thiobis(2-tert-butyl-5-methyl-4,1-phenylene)bis(3-(dodecylthio)propionate), 2,2'-thiodiethylenebis(3-aminobutenoate), 4,6-bis(octylthiomethyl)-o-cresol, 2,2'-thiodiethylenebis[3-(3,5-di-tert-butyl-4-hydroxyphenyl)propionate], 2,2'-thiobis(4-methyl-6-tert-butylphenol), 2,2'-thiobis(6-tert-butyl-p-cresol), 2-ethylhexyl-(3,5-di-tert-butyl-4-hydroxybenzyl)thioacetate, 4,4'-thiobis(6-tert-butyl-3-methylphenol), 4,4'-thiobis(4-methyl-6-tert-butylphenol), 4,4'-[thiobis(methylene)]bis(2-tert-butyl-6-methyl-1-hydroxybenzyl), bis(4,6-di-tert-butylphenol-2-yl)sulfide, tridecyl-3,5-di-tert-butyl-4-hydroxybenzylthioacetate, 1,4-bis(octylthiomethyl)-6-methylphenol, 2,4-bis(dodecylthiomethyl)-6-methylphenol, distearyl-disulfide, bis(methyl-4-[3-n-alkyl (C₁₂/C₁₄) thiopropionyloxy]5-tert-butyl phenyl)sulfide, and the like. These thioether-based antioxidizing agents can be used alone or in a combination of two or more.

The amount of thioether-based antioxidizing agent used when blended with a resin is preferably from 0.001 to 5 parts by mass, and more preferably from 0.01 to 1.0 part by mass relative to 100 parts by mass of the flame retardant resin composition.

Examples of the other antioxidizing agents include N-benzyl-α-phenyl nitrone, N-ethyl-α-methyl nitrone, N-octyl-α-heptyl nitrone, N-lauryl-α-undecyl nitrone, N-tetradecyl-α-tridecyl nitrone, N-hexadecyl-α-pentadecyl nitrone, N-octyl-α-heptadecyl nitrone, N-hexadecyl-α-heptadecyl nitrone, N-octadecyl-α-pentadecyl nitrone, N-heptadecyl-α-heptadecyl nitrone, N-octadecyl-α-heptadecyl nitrone, and other nitrone compounds, 3-arylbenzofuran-2(3H)-one, 3-(alkoxyphenyl)benzofuran-2-one, 3-(acyloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-tert-butyl-3-{4-(2-hydroxyethoxy)phenyl}-benzofuran-2(3H)-one, 6-(2-(4-(5,7-di-tert-2-oxo-2,3-dihydrobenzofuran-3-yl)phenoxy)ethoxy)-6-oxohexyl-6-((6-hydro xyhexanoyl)oxy)hexanoate, 5-di-tert-butyl-3-(4-((15-hydroxy-3,6,9,13-tetraoxapentadecyl)oxy)phenyl)benzofuran-2(3H)one , and other benzofuran compounds, and the like. These other antioxidizing agents can be used alone or in a combination of two or more.

The amount of other antioxidizing agents used when blended with a resin is preferably from 0.001 to 5 parts by mass, and more preferably from 0.01 to 1.0 part by mass relative to 100 parts by mass of the flame retardant resin composition.

Examples of the nucleating agent include sodium benzoate, 4-tert-butylbenzoic acid aluminum salt, sodium adipate, 2-sodiumbicyclo[2.2.1]heptane-2,3-dicarboxylate, and other carboxylic acid metal salts, sodium bis(4-tert-butylphenyl)phosphate, sodium-2,2'-methylenebis(4,6-di-tert-butylphenyl)phosphate, lithium-2,2'-methylenebis(4,6-di-tert-butylphenyl)phosphate, and other phosphoric acid ester metal salts, dibenzylidene sorbitol, bis(methylbenzylidene)sorbitol, bis(3,4-dimethylbenzylidene)sorbitol, bis(p-ethylbenzylidene)sorbitol, bis(dimethylbenzylidene)sorbitol, 1,2,3-trideoxy-4,6: 5,7-bis-O-((4-propylphenyl)methylene)-nonitol, 1,3:2,4-bis(p-methylbenzylidene)sorbitol, 1,3:2,4-bis-O-benzylidene-D-glucitol (dibenzylidene sorbitol), and other polyalcohol derivatives, N,N',N"-tris[2-methylcyclohexyl]-1,2,3-propanetricarboxamide, N,N',N"-tricyclohexyl-1,3,5-benzenetricarboxamide, N,N'-dicyclohexyl-naphthalene dicarboxamide, 1,3,5-tri(dimethyl isopropoyl amino)benzene, and other amide compounds, and the like. These nucleating agents can be used alone or in a combination of two or more. The amount of nucleating agent used when blended with a resin is preferably from 0.001 to 5 parts by mass, and more preferably from 0.01 to 1.0 part by mass relative to 100 parts by mass of the flame retardant resin composition.

Examples of the ultraviolet absorbing agent include 2,4-dihydroxy benzophenon, 5,5'-methylenebis(2-hydroxy-4-methoxybenzophenon), 2-hydroxy-4-n-octoxybenzophenon, 2-hydroxy-4-methoxybenzophenon, 2-hydroxy-4-dodecyloxybenzophenon, 2,2'-dihydroxy-4-methoxybenzophenone, and other benzophenone-based ultraviolet absorbing agents, 2-(2-hydroxy-5-methylphenyl)benzotriazole, 2-(2-hydroxy-5-tert-octylphenyl)benzotriazole, 2-(2-hydroxy-3, 5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), 2-(2-hydroxy-3-tert-butyl-5-carboxyphenyl)benzotriazole, and other polyethylene glycol esters, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butyl phenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, 2-[2-hydroxy-4-(3-methacryloyloxypropyl)phenyl]benzotriazole, and other benzotriazole-based ultraviolet absorbing agents, phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate, behenyl(3,5-di-tert-butyl-4-hydroxy)benzoate, and other benzoate-based ultraviolet absorbing agents, 2-ethyl-2'-ethoxy oxalanilide, 2-ethoxy-4'-dodecyl oxalanilide, 2-ethyl-2'-ethoxy-5'-tert-butyl- oxalanilide, and other substituted-oxalanilide-based ultraviolet absorbing agents, ethyl-α-cyano-β,β-diphenylacrylate, methyl-2-cyano-3-methyl-3-(p-methoxyphenyl)acrylate, tetrakis(α-cyano-β,β-diphenylacryloyloxymethyl)methane, and other cyanoacrylate-based ultraviolet absorbing agents, 2-(2-hydroxy-4-(2-(2-ethylhexanoyloxy)ethyloxy)-4,6-diphenyl-1,3,5-triazine, 2,4,6-tris(2-hydroxy-4-hexyloxy-3-methylphenyl)-1,3,5-triazine, 2-(2-hydroxy-4-octylfoxyphenyl)-4,6-bis(2,4-dimethylphenyl)-1,3,5-triazine, 2-(4,6-diphenyl-1,3,5-triazine-2-yl)-5-hexyloxyphenol, 2-(4,6-di(1,1'-biphenyl)4-yl)-1,3,5-triazine-2-yl)-5-(2-ethylhexyloxy)phenol, and other triazine-based ultraviolet absorbing agents. These ultraviolet absorbing agents can be used alone or in a combination of two or more.

The amount of ultraviolet absorbing agent used when blended with a resin is preferably from 0.001 to 5 parts by mass, and more preferably from 0.05 to 0.5 parts by mass relative to 100 parts by mass of the flame retardant resin composition.

Examples of the light stabilizing agent include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)di(tridecyl)-1,2,3,4-butane tetracarboxylate, bis(1,2,2,6,6-pentamethyl-4-piperidyl)-di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5, 8,12-4-azadodecane, 1,5,8,12-tetrakis[2,4-bis(N-butyl-N-(1,2,2,6,6-pentamethyl-4-piperidyl)amino)-s-triazine-6-yl]-1 15,8-12-4-azadodecane, 1,6,11-tris[2,4-bis(N-butyl-N-(2,2,6,6-tetramethyl-4-piperidyl)amino)-s-triazine-6-yl]amino undecane, 1,6,11-tris[2,4-bis(N-butyl-N-(1,2,2,6,6-pentamethyl-4-piperidyl)amino)-s-triazine-6-yl]amino undecane, bis{4-(1-octyloxy-2,2,6,6-tetramethyl)piperidyl}decanedionate, bis{4-(2,2,6,6-tetramethyl-1-undecyloxy)piperidyl}carbonate, TINUVINNOR 371 available from Ciba Specialty Chemicals, 2,2,6,6-tetramethyl-4-piperidylmethacrylate, 1,2,3,4-butanetetracarboxylic acid, a polymer of 2,2-bis(hydroxymethyl)-1,3-propanediol and 3-hydroxy-2,2-dimethylpropanol, 1,2,2,6,6-pentamethyl-4-piperidinyl ester, 1,3-bis(2,2,6,6-tetramethylpiperidine-4-yl)2,4-ditridecylbenzene-1,2,3,4,tetracarboxylate, bis(1-octyloxy-2,2,6,6-pentamethyl-4-piperidyl) sebacate, poly[[6-[(1,1,3,3-tetramethylbutyl)amino]-1,3,5-triazine-2,4-diyl][(2,2,6,6-tetramethyl-4-piperid inyl)imino]-1,6-hexanediyl[(2,2,6,6-tetramethyl-4-piperidinyl)imino]]), and the like. These light stabilizing agents can be used alone or in a combination of two or more.

The amount of light stabilizing agent used when blended with a resin is preferably from 0.001 to 5 parts by mass, and more preferably from 0.005 to 0.5 parts by mass relative to 100 parts by mass of the flame retardant resin composition.

Examples of the plasticizing agent include epoxidized soybean oil, epoxidized linseed oil, an epoxidized fatty acid octyl ester, and other epoxy-based plasticizing agents, methacrylate-based plasticizing agents, a polycondensate of dicarboxylic acid and polyalcohol, a polycondensate of polyvalent carboxylic acid and polyalcohol, and other polyester-based plasticizing agents, a polycondensate of dicarboxylic acid, polyalcohol and alkylene glycol, a polycondensate of dicarboxylic acid, polyalcohol and arylene glycol, a polycondensate of a polyvalent carboxylic acid, polyalcohol and alkylene glycol, a polycondensate of a polyvalent carboxylic acid, polyalcohol and arylene glycol, and other polyether ester-based plasticizing agents, an adipic acid ester, a succinic acid ester, and other fatty acid ester-based plasticizing agents, a phthalic acid ester, a terephthalic acid ester, a trimellitic acid ester, a pyromellitic acid ester, a benzoic acid ester, and other aromatic ester-based plasticizing agents, and the like. These plasticizing agents can be used alone or in a combination of two or more.

The amount of plasticizing agent used when blended with a resin is preferably from 0.1 to 500 parts by mass, and more preferably from 1 to 100 parts by mass relative to 100 parts by mass of the flame retardant resin composition.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, mica, silica, alumina, potassium titanate whisker, wollastonite, fibrous magnesium oxysulfate, montmorillonite, and the like. The particle size (fiber diameter or fiber length and aspect ratio in the case where the filler is fibrous) may be selected as appropriate. These fillers can be used alone or in a combination of two or more.

The amount of filler used when blended with a resin is preferably from 1 to 100 parts by mass, and more preferably from 3 to 80 parts by mass relative to 100 parts by mass of the flame retardant resin composition.

Examples of fatty acids in the fatty acid metal salt include capric acid, 2-ethylhexanoic acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanic acid, melissic acid, and other saturated fatty acids, 4-decenoic acid, 4-dodecenoic acid, palmitoleic acid, α-linolenic acid, linoleic acid, γ-linolenic acid, stearidonic acid, petroselinic acid, oleic acid, elaidic acid, vaccenic acid, eicosapentaenoic acid, docosapentaenoic acid, docosahexaenoic acid, and other linear unsaturated fatty acids, trimesic acid, and other aromatic fatty acids. In particular, it is preferable to use a saturated fatty acid such as myristic acid, stearic acid, or 12-hydroxystearic acid. Examples of metals in the fatty acid metal salt include alkali metal, magnesium, calcium, strontium, barium, titanium, manganese, iron, zinc, silicon, zirconium, yttrium, barium, hafnium, and the like. In particular, it is preferable to use alkali metals such as sodium, lithium, and potassium. These fatty acid metal salts can be used alone or in a combination of two or more.

The amount of fatty acid metal salt used when blended with a resin is preferably from 0.001 to 5 parts by mass, and more preferably from 0.05 to 3 parts by mass relative to 100 parts by mass of the flame retardant resin composition.

Examples of the antistatic agent include: cationic antistatic agents such as a fatty acid quaternary ammonium ion salt and a polyamine quaternary salt; anionic antistatic agents such as a higher alcohol phosphoric acid ester salt, a higher alcohol EO adduct, a polyethylene glycol fatty acid ester, an anionic alkyl sulfonic acid salt, a higher alcohol sulfuric acid ester salt, a higher alcohol ethylene oxide adduct sulfuric acid ester salt, and a higher alcohol ethylene oxide adduct phosphoric acid ester salt; nonionic antistatic agents such as a polyalcohol fatty acid ester, a polyglycolphosphoric acid ester, and polyoxyethylene alkyl allyl ether; amphoteric alkyl betaines such as an alkyl dimethyl aminoacetic acid betaine; and amphoteric antistatic agents such as an imidazoline-type amphoteric active agent. These antistatic agents can be used alone or in a combination of two or more.

The amount of antistatic agent used when blended with a resin is preferably from 0.01 to 20 parts by mass, and more preferably from 3 to 10 parts by mass relative to 100 parts by mass of the flame retardant resin composition.

As the pigment, a commercially available pigment can be used. Examples of the pigment include: Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Orange 13, 31, 34, 36, 38, 43, 46, 48, 49, 51, 52, 55, 59, 60, 61, 62, 64, 65, and 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Green 7, 10, and 36; Pigment Blue 15, 15:1, 15:2, 15:3, 15:4, 15:5, 15:6, 22, 24, 56, 60, 61, 62, and 64; Pigment Violet 1, 19, 23, 27, 29, 30, 32, 37, 40, and 50, and the like. These pigments can be used alone or in a combination of two or more.

The amount of pigment used when blended with a resin is preferably from 0.0001 to 10 parts by mass relative to 100 parts by mass of the flame retardant resin composition.

As the dye, a commercially available dye can be used. Examples of the dye include an azo dye, an anthraquinone dye, an indigoid dye, a triaryl methane dye, a xanthene dye, an alizarin dye, an acridine dye, a stilbene dye, a thiazole dye, a naphthol dye, a quinoline dye, a nitro dye, an indamine dye, an oxazine dye, a phthalocyanine dye, a cyanine dye, and the like. These dyes can be used alone or in a combination of two or more.

The amount of dye used when blended with a resin is preferably from 0.0001 to 10 parts by mass relative to 100 parts by mass of the flame retardant resin composition.

The composition according to the present invention can be obtained by mixing essential components (A) and (B) with optional components (C) and (D) and other optional components where necessary. Any type of mixer can be used to mix the components. The components may be mixed under heat. Examples of the mixer that can be used include a turbula mixer, a henschel mixer, a ribbon blender, a V-type mixer, a W-type mixer, a super mixer, a nauta mixer, and the like.

The composition according to the present invention is effective for imparting flame retardancy to a resin, and is particularly useful as a flame retardant agent for use in a resin composition (also referred to as "resin additive"). The composition according to the present invention is preferably used as a flame retardant resin composition (hereinafter also referred to as "flame retardant resin composition according to the present invention") by being blended with a resin.

As the resin to which flame retardancy is imparted by the composition according to the present invention, a synthetic resin such as a thermoplastic resin or a thermosetting resin can be used. Specific examples of the thermoplastic resin include: thermoplastic resins such as a polyolefin-based resin, a biomass-containing polyolefin-based resin, a halogen-containing resin, an aromatic polyester resin, a linear polyester resin, a degradable aliphatic resin, a polyamide resin, a cellulose ester-based resin, a polycarbonate resin, a polyurethane resin, a polyphenylene oxide-based resin, a polyphenylene sulfide-based resin, and an acrylic resin; and blends thereof. On the other hand, examples of the thermosetting resin include a phenol resin, a urea resin, a melamine resin, an epoxy resin, an unsaturated polyester resin, and the like.

Other examples of the synthetic resin to which flame retardancy is imparted by the composition according to the present invention include an olefin-based thermoplastic elastomer, a styrene-based thermoplastic elastomer, a polyester-based thermoplastic elastomer, a nitrile-based thermoplastic elastomer, a nylon-based thermoplastic elastomer, a vinyl chloride-based thermoplastic elastomer, a polyamide-based thermoplastic elastomer, a polyurethane-based thermoplastic elastomer, and the like.

These resins may be used alone or in a combination of two or more. Also, the resins may be alloyed.

The resin used in the present invention can be used irrespective of molecular weight, the degree of polymerization, density, softening point, the proportion of an insoluble in a solvent, the degree of stereo-regularity, the presence or absence of catalyst residues, the type of monomer used as a raw material, the blending ratio of the monomer, the type of polymerization catalyst (for example, a ziegler catalyst, a metallocene catalyst, or the like), and the like.

Out of the various types of resins listed above, from the viewpoint of imparting excellent flame retardancy, it is preferable to use a polyolefin-based resin or a polyurethane-based thermoplastic elastomer. Examples of the polyolefin-based resin include polyethylene, low density polyethylene, linear low density polyethylene, high density polyethylene, polypropylene, homopolypropylene, a polypropylene random copolymer, a polypropylene block copolymer, a polypropylene impact copolymer, a polypropylene high impact copolymer, isotactic polypropylene, syndiotactic polypropylene, hemi-isotactic polypropylene, maleic anhydride-modified polypropylene, polybutene, a cycloolefin polymer, stereoblock polypropylene, poly-3-methyl-1-butene, poly-3-methyl-1-pentene, poly-4-methyl-1-pentene, other α-olefin copolymers, an ethylene/propylene block or random copolymer, an ethylene-methyl methacrylate copolymer, an ethylene-vinyl acetate copolymer, other α-olefin copolymers, and the like.

As the polyurethane-based thermoplastic elastomer, a thermoplastic polyurethane resin (TPU) may be used. The thermoplastic polyurethane resin (TPU) is a rubber-like elastic body that has a urethane group (-NHCOO-) in its molecular structure, and includes a movable long chain portion called a soft segment and a very highly crystalline portion called a hard segment. Usually, it is produced using a polyol, a di-isocyanate, and a chain extender.

Also, thermoplastic polyurethane resin can be roughly classified into the following types according to the molding method: injection-type thermoplastic polyurethane resin that is injected into a mold while the resin is in a liquid state, and then cured; a type of thermoplastic polyurethane resin that is roll-kneaded, and then press-molded as with conventional rubber; and a type of thermoplastic polyurethane resin that that can be processed in the same manner as ordinary thermoplastic resin. However, in the present invention, any of the above thermoplastic polyurethane resins can be used.

Specific examples of the thermoplastic polyurethane resin include an ester (lactone)-based polyurethane copolymer, an ester (adipate)-based polyurethane copolymer, an ether-based polyurethane copolymer, a carbonate-based polyurethane copolymer, and an ether ester-based polyurethane copolymer. These thermoplastic polyurethane resins (TPU) can be used alone or in combination.

In the flame retardant resin composition according to the present invention, the amount of resin is preferably from 50 to 99.9 mass%, and more preferably from 60 to 90 mass%. In the case where the flame retardant resin composition contains the composition according to the present invention as a flame retardant agent composition, the flame retardant agent composition is contained in an amount of preferably from 10 to 400 parts by mass, and more preferably from 20 to 80 parts by mass relative to 100 parts by mass of the resin. By setting the amount of flame retardant agent composition to 10 parts by mass or more, sufficient flame retardancy is exhibited. By setting the amount of flame retardant agent composition to 400 parts by mass or less, physical properties that are inherent to the resin are unlikely to be impaired.

By molding the flame retardant resin composition according to the present invention, a molded article with excellent flame retardancy can be obtained. There is no particular limitation on the molding method. Examples of the molding method include extrusion processing, calender processing, injection molding, roll molding, compression molding, blow molding, and the like. A molded article of any shape such as a resin plate, a sheet, a film, or a variant can be produced.

The flame retardant resin composition according to the present invention and a molded body formed therefrom can be used in a wide variety of industrial fields such as the fields of electricity, electronics, and communication, electronic and engineering, agriculture, forestry and fisheries, mining, construction, food, fiber, clothing, medicine, coal, petroleum, rubber, leather, automobiles, precision equipment, wood, construction material, civil engineering, furniture, printing, and musical instruments. More specific examples include a printer, a personal computer, a word processor, a keyboard, a PDA (personal digital assistant), a telephone, a copy machine, a facsimile, an ECR (electronic cash register), a desk calculator, an electronic notepad, an electronic card, a holder, stationery, other stationary supplies, office automation equipment, a washing machine, a refrigerator, a vacuum cleaner, a microwave oven, a lighting apparatus, a gaming console, an iron, *kotatsu* (a Japanese table with an electric heater), a household appliance, a TV set, a VTR, a video camera, a radio-cassette recorder, a tape recorder, a minidisk, a CD player, a speaker, a liquid crystal display, audio-visual equipment, a connector, a relay, a condenser, a switch, a printed circuit board, a coil bobbin, a semiconductor sealing material, an LED sealing material, an electric wire, a cable, a transformer, a deflecting yoke, a power distribution board, a clock, electric and electronic parts, communication equipment, housing (frame, casing, cover, exterior) and parts of office automation equipment, and automobile interior and exterior materials. Out of these, in particular, the flame retardant resin composition according to the present invention and a molded body formed therefrom are preferably used in electronic parts such as electric wires and automobile parts such as automobile interior and exterior parts.

Furthermore, the flame retardant resin composition according to the present invention and a molded body formed therefrom are used in various types of applications including: materials for use in automobiles, hybrid cars, electric automobiles, vehicles, ships, aircraft, buildings, houses and architecture such as seats (fillings, outer materials, and the like), belts, ceiling coverings, convertible tops, armrests, door trims, rear package trays, carpets, mats, sun visors, wheel covers, mattress covers, air bags, insulating materials, hand holding rings, hand holding straps, electric wire covering materials, electric insulating materials, paints, coating materials, upholstery materials, floor materials, corner walls, carpets, wallpaper, wall covering materials, exterior materials, interior materials, roofing materials, decking materials, wall materials, pillar materials, deckings, fence materials, frameworks, moldings, windows, door profiles, shingles, panels, terraces, balconies, noise insulation boards, heat insulation boards, window materials; civil engineering materials; and houseware and sporting goods such as clothes, curtains, bed sheets, plywood boards, synthetic fiber boards, rugs, doormats, sheets, buckets, hoses, containers, glasses, bags, cases, goggles, ski plates, rackets, tents, and musical instruments.

### Examples

Hereinafter, the present invention will be described in further detail by way of examples. However, the present invention is not limited to the examples given below. The numerical values shown in Tables 1 and 2 given below are expressed in parts by mass.

### Preparation of Composition

Compositions were obtained by blending the components other than the resins listed in Tables 1 and 2 given below at the ratios shown in the tables and mixing them using a henschel mixer. In the case where an epoxy-based coupling agent, a lubricant and/or silicone oil was added, the other components were pre-mixed, and thereafter the epoxy-based coupling agent, lubricant or silicone oil was added and mixed using a henschel mixer.

### Preparation of Flame Retardant Resin Composition

### Examples 1 to 15 and Comparative Examples 1 to 4

A thermoplastic polyurethane resin composition was obtained by blending 0.1 parts by mass of calcium stearate, 0.3 parts by mass of glycerin monostearate, 0.1 parts by mass of tetrakis[methylene-3-(3,5-di-tert-butyl-4-hydroxyphenyl)propionate] methane, and 0.1 parts by mass of 2,2'-methylenebis(4,6-di-tert-butyl phenyl)-2-ethylhexylphosphite with 100 parts by mass of thermoplastic polyurethane resin (Elastollan 1185A available from BASF), and pre-mixing them using a henschel mixer. Then, a flame retardant resin composition was obtained by blending the obtained thermoplastic polyurethane resin composition with each of the compositions prepared using components shown in Table 1 or 2 at the ratios (part by mass) shown in the tables, and mixing them using a henschel mixer.

### Examples 16 to 20 and Comparative Examples 5 to 8

A polypropylene resin composition was obtained by blending 0.1 parts by mass of calcium stearate (higher fatty acid metal salt), 0.1 parts by mass of tetrakis[methylene-3-(3,5-di-tert-butyl-4-hydroxyphenyl)propionate] methane (phenol-based antioxidizing agent), and 0.1 parts by mass of tris(2,4-di-tert-butyl phenyl)phosphite (phosphorus-based antioxidizing agent) with 100 parts by mass of polypropylene (with a melt flow rate of 8 g/10 min, the melt flow rate being measured at 230°C under a load of 2.16 kg in accordance with JIS K7210), and pre-mixing them using a henschel mixer. Then, a flame retardant resin composition was obtained by blending the obtained polypropylene resin composition with each of the compositions prepared using the components shown in Table 1 or 2 at the ratios (part by mass) shown in the tables, and mixing them using a henschel mixer.

Pellets were produced in the following manner using each of the resin compositions obtained above, and specimens for flame retardancy evaluation were produced from the pellets. The specimens were subjected to flame retardancy evaluation and surface smoothness evaluation. The results are shown in Tables 1 and 2 given below.

### Evaluation

### Flame Retardancy Evaluation

Each of the resin compositions of Examples 1 to 15 and Comparative Examples 1 to 4 containing a thermoplastic polyurethane resin was melt kneaded at a cylinder temperature of 190 to 200°C and a screw speed of 150 rpm using a biaxial extrusion molding machine (TEX-30α available from Japan Steel Works, Ltd.). Strands discharged from the die were cooled using a cooling bus and cut using a pelletizer. In this way, resin composition pellets were produced.

Each of the resin compositions of Examples 16 to 20 and Comparative Examples 5 to 8 containing a polypropylene resin was melt kneaded at a cylinder temperature of 220 to 230°C and a screw speed of 150 rpm using a biaxial extrusion molding machine (TEX-30α available from Japan Steel Works, Ltd.). Strands discharged from the die were cooled using a cooling bus and cut using a pelletizer. In this way, resin composition pellets were produced.

The resin composition pellets obtained above were subjected to injection molding using NEX-80 available from Nissei Plastic Industrial Co., Ltd., and specimens for flame retardancy evaluation, each having a length of 127 mm, a width of 12.7 mm, and a thickness of 1.6 mm, were obtained. In Examples 1 to 15, and Comparative Examples 1 to 14, the screw temperature was set to 200°C, and the die temperature was set to 40°C. In Examples 16 to 20, and Comparative Examples 5 to 8, the screw temperature was set to 230°C, and the die temperature was set to 40°C.

Each of the obtained specimens was subjected to 20 mm vertical combustion test (UL-94V) in accordance with ISO 1210. Specifically, the specimen was held vertically, and a burner flame was applied to the lower end of the specimen for 10 seconds, and then the burner flame was removed. The time required for the flame on the specimen to extinguish was measured. Then, at the same time when the flame extinguished, a burner flame was applied for 10 seconds for the second time, and the time required for the flame on the specimen to extinguish was measured in the same manner as in the first time. Evaluation was also made by checking whether or not a cotton piece provided under the specimen caught fire by a flame dropping thereon. Flame retardancy rating was determined in accordance with the UL-94V standard based on the first combustion time, the second combustion time, whether or not the cotton piece caught fire, and the like. As the flame retardancy rating, V-0 indicates the highest level, and flame retardancy decreases in the order of V- 1 to V-2. A rating of NR is given when a specimen does not correspond to any of the ratings V-0 to V-2. It is assumed that, when a drip prevention effect is seen in the present invention, a rating of V-2 or higher, and preferably V-0 is achieved.

### Surface Smoothness

The surface smoothness of each of the obtained specimens was evaluated based on the following criteria.
A: The specimen has a smooth surface without roughness.
B: The specimen has a slightly rough surface.

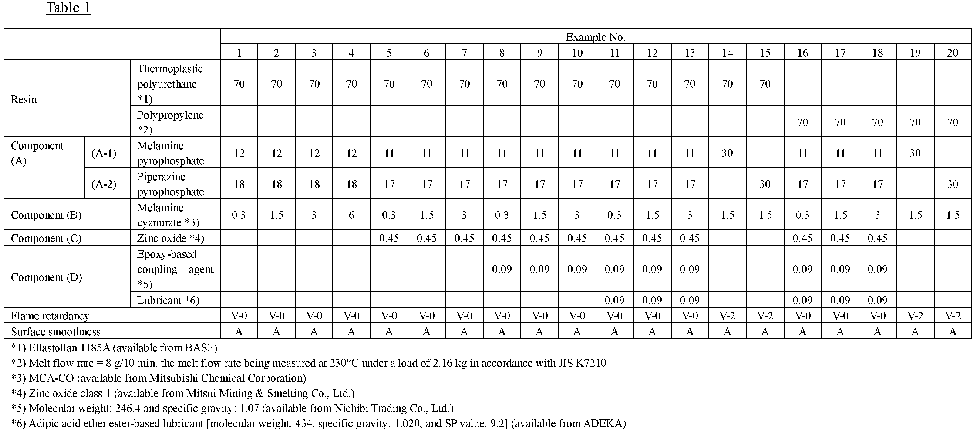

**Table 2**

| | | | Comparative Example No. | | | | | | | |
|---|---|---|---|---|---|---|---|---|---|---|
| | | | 1 | 2 | 3 | 4 | 5 | 6 | 7 | 8 |
| Resin | | Thermoplastic polyurethane *1) | 70 | 70 | 70 | 70 | | | | |
| | | Polypropylene *2) | | | | | 70 | 70 | 70 | 70 |
| Component (A) | (A-1) | Melamine pyrophosphate | | 12 | 11 | 11 | | 12 | 11 | 11 |
| | (A-2) | Piperazine pyrophosphate | | 18 | 17 | 17 | | 18 | 17 | 17 |
| Component (B) | | Melamine cyanurate *3) | 1.5 | | | | 1.5 | | | |
| Component (C) | | Zinc oxide *4) | | | 0.45 | 0.45 | | | 0.45 | 0.45 |
| Component (D) | | Epoxy-based coupling agent *5) | | | | 0.3 | | | | 0.3 |
| | | Lubricant *6) | | | | 0.03 | | | | 0.03 |
| Comparative Component (A) | | Phosphate ester *7) | 30 | | | | 30 | | | |
| Flame retardancy | | | NR | V-2 | V-2 | V-2 | NR | V-2 | V-2 | V-2 |
| Surface smoothness | | | B | B | B | B | B | B | B | B |

| | | | | | | | | | | |
|---|---|---|---|---|---|---|---|---|---|---|
| * 1) Ellastollan 1185A (available from BASF) *2) Melt flow rate = 8 g/10 min, the melt flow rate being measured at 230°C under a load of 2.16 kg in accordance with JIS K7210 *3) MCA-CO (available from Mitsubishi Chemical Corporation) *4) Zinc oxide class 1 (available from Mitsui Mining & Smelting Co., Ltd.) *5) Molecular weight: 246.4 and specific gravity: 1.07 (available from Nichibi Trading Co., Ltd.) *6) Adipic acid ether ester-based lubricant [molecular weight: 434, specific gravity: 1.020, and SP value: 9.2] (available from ADEKA) *7) PX-200 (available from Daihachi Chemical Industry Co., Ltd.) | | | | | | | | | | |

As is clear from the results shown in Table 1, Examples in which a composition containing the components (A) and (B) was blended with a resin exhibited good results in both the flame retardancy evaluation test in accordance with UL-94V standard and the surface smoothness evaluation. In particular, if the component (A) contains the components (A-1) and (A-2), a further satisfactory result is obtained in the flame retardancy evaluation.

In contrast, as shown in Table 2, Comparative Example Nos. 1 and 5 in which the component (A) was not used exhibited insufficient results in the flame retardancy and the surface smoothness, and Comparative Examples Nos. 2 to 4 and 6 to 8) in which the component (B) was not used exhibited insufficient results in the surface smoothness.

Accordingly, it can be seen that the composition according to the present invention can impart high levels of flame retardancy and surface smoothness to a resin, and is therefore excellent as a flame retardant agent.

### Industrial Applicability

According to the present invention, it is possible to provide a composition that can impart a drip prevention effect and excellent flame retardancy to a resin and can provide a molded article with good surface smoothness, by being mixed with the resin, and a flame retardant resin composition that contains the composition and a resin and has excellent flame retardancy.

## Claims

1. A composition comprising an amine phosphate (A) and melamine cyanurate (B); wherein the component (A) contains components (A-1) and (A-2) below:
the component (A-1) being at least one melamine salt selected from the group consisting of melamine orthophosphate, melamine pyrophosphate, and melamine polyphosphate; and
the component (A-2) being at least one piperazine salt selected from the group consisting of piperazine orthophosphate, piperazine pyrophosphate, and piperazine polyphosphate.

2. The composition according to claim 1, wherein the component (B) is contained in an amount of 0.1 to 20 parts by mass relative to 100 parts by mass of a total of the components (A-1) and (A-2).

3. The composition according to claim 1 or 2, further comprising zinc oxide (C) in an amount of 0.01 to 10 parts by mass relative to 100 parts by mass of the component (A).

4. The composition according to any one of claims 1 to 3, further comprising at least one selected from the group consisting of silicone oil, an epoxy-based coupling agent, a hydrotalcite, and a lubricant as a component (D) in an amount of 0.01 to 5 parts by mass relative to 100 parts by mass of the component (A).

5. A flame retardant agent comprising the composition according to any one of claims 1 to 4.

6. A flame retardant resin composition comprising a resin and the flame retardant agent according to claim 5 in an amount of 10 to 400 parts by mass relative to 100 parts by mass of the resin.

7. A molded article formed from the flame retardant resin composition according to claim 6.

8. A method for imparting flame retardancy to a resin, the method comprising mixing a composition that contains an amine phosphate (A) and melamine cyanurate (B) with a resin; wherein the component (A) contains components (A-1) and (A-2) below:
the component (A-1) being at least one melamine salt selected from the group consisting of melamine orthophosphate, melamine pyrophosphate, and melamine polyphosphate; and
the component (A-2) being at least one piperazine salt selected from the group consisting of piperazine orthophosphate, piperazine pyrophosphate, and piperazine polyphosphate.

9. Use of a composition that contains an amine phosphate (A) and melamine cyanurate (B) as a flame retardant agent;
wherein the component (A) contains components (A-1) and (A-2) below:
the component (A-1) being at least one melamine salt selected from the group consisting of melamine orthophosphate, melamine pyrophosphate, and melamine polyphosphate; and
the component (A-2) being at least one piperazine salt selected from the group consisting of piperazine orthophosphate, piperazine pyrophosphate, and piperazine polyphosphate.

## Patentansprüche

1. Zusammensetzung, umfassend ein Aminphosphat (A) und Melamincyanurat (B), wobei die Komponente (A) die nachstehenden Komponenten (A-1) und (A-2) enthält:
wobei die Komponente (A-1) mindestens ein Melaminsalz ist, ausgewählt aus der Gruppe, die aus Melaminorthophosphat, Melaminpyrophosphat und Melaminpolyphosphat besteht; und
wobei die Komponente (A-2) mindestens ein Piperazinsalz ist, ausgewählt aus der Gruppe, die aus Piperazinorthophosphat, Piperazinpyrophosphat und Piperazinpolyphosphat besteht.

2. Zusammensetzung nach Anspruch 1, wobei die Komponente (B) in einer Menge von 0,1 bis 20 Masseteilen, bezogen auf 100 Masseteile der Summe der Komponenten (A-1) und (A-2), enthalten ist.

3. Zusammensetzung nach Anspruch 1 oder 2, ferner enthaltend Zinkoxid (C) in einer Menge von 0,01 bis 10 Masseteilen, bezogen auf 100 Masseteile der Komponente (A).

4. Zusammensetzung nach einem der Ansprüche 1 bis 3, die ferner mindestens eines aus der Gruppe bestehend aus Silikonöl, einem Kopplungsmittel auf Epoxidbasis, einem Hydrotalcit und einem Schmiermittel als Komponente (D) in einer Menge von 0,01 bis 5 Masseteilen, bezogen auf 100 Masseteile der Komponente (A), enthält.

5. Flammschutzmittel, umfassend die Zusammensetzung nach einem der Ansprüche 1 bis 4.

6. Flammhemmende Harzzusammensetzung, umfassend ein Harz und das Flammschutzmittel nach Anspruch 5 in einer Menge von 10 bis 400 Masseteilen, bezogen auf 100 Masseteile des Harzes.

7. Geformter Gegenstand, der aus der flammhemmenden Harzzusammensetzung nach Anspruch 6 gebildet ist.

8. Verfahren, um ein Harz flammhemmend zu machen, wobei das Verfahren das Mischen einer Zusammensetzung, die ein Aminphosphat (A) und Melamincyanurat (B) enthält, mit einem Harz umfasst, wobei die Komponente (A) die nachstehenden Komponenten (A-1) und (A-2) enthält:
wobei die Komponente (A-1) mindestens ein Melaminsalz ist, ausgewählt aus der Gruppe, die aus Melaminorthophosphat, Melaminpyrophosphat und Melaminpolyphosphat besteht; und
wobei die Komponente (A-2) mindestens ein Piperazinsalz ist, ausgewählt aus der Gruppe, die aus Piperazinorthophosphat, Piperazinpyrophosphat und Piperazinpolyphosphat besteht.

9. Verwendung einer Zusammensetzung, die ein Aminphosphat (A) und Melamincyanurat (B) enthält, als flammhemmendes Mittel
wobei die Komponente (A) die nachstehenden Komponenten (A-1) und (A-2) enthält:
wobei die Komponente (A-1) mindestens ein Melaminsalz ist, ausgewählt aus der Gruppe, die aus Melaminorthophosphat, Melaminpyrophosphat und Melaminpolyphosphat besteht; und
wobei die Komponente (A-2) mindestens ein Piperazinsalz ist, ausgewählt aus der Gruppe, die aus Piperazinorthophosphat, Piperazinpyrophosphat und Piperazinpolyphosphat besteht.

## Revendications

1. Composition comprenant un phosphate d'amine (A) et un cyanurate de mélamine (B); dans laquelle le composant (A) contient les composants (A-1) et (A-2) ci-dessous:
le composant (A-1) étant au moins un sel de mélamine choisi dans le groupe constitué par l'orthophosphate de mélamine, le pyrophosphate de mélamine et le polyphosphate de mélamine; et
le composant (A-2) étant au moins un sel de pipérazine choisi dans le groupe constitué par l'orthophosphate de pipérazine, le pyrophosphate de pipérazine et le polyphosphate de pipérazine.

2. Composition selon la revendication 1, dans laquelle le composant (B) est contenu dans une quantité de 0,1 à 20 parties en masse par rapport à 100 parties en masse du total des composants (A-1) et (A-2).

3. Composition selon la revendication 1 ou 2, comprenant en outre de l'oxyde de zinc (C) en une quantité de 0,01 à 10 parties en masse par rapport à 100 parties en masse du composant (A).

4. Composition selon l'une des revendications 1 à 3, comprenant en outre au moins un composant choisi dans le groupe constitué par l'huile de silicone, un agent de couplage à base d'époxy, une hydrotalcite et un lubrifiant en tant que composant (D) dans une quantité de 0,01 à 5 parties en masse par rapport à 100 parties en masse du composant (A).

5. Agent ignifuge comprenant la composition selon l'une des revendications 1 à 4.

6. Composition de résine ignifuge comprenant une résine et l'agent ignifuge selon la revendication 5 dans une proportion de 10 à 400 parties en masse par rapport à 100 parties en masse de la résine.

7. Article moulé formé à partir de la composition de résine ignifuge selon la revendication 6.

8. Méthode pour conférer un effet retardateur de flamme à une résine, la méthode comprenant le mélange d'une composition contenant un phosphate d'amine (A) et un cyanurate de mélamine (B) avec une résine; dans laquelle le composant (A) contient les composants (A-1) et (A-2) ci-dessous:
le composant (A-1) étant au moins un sel de mélamine choisi dans le groupe constitué par l'orthophosphate de mélamine, du pyrophosphate de mélamine et du polyphosphate de mélamine; et
le composant (A-2) étant au moins un sel de pipérazine choisi dans le groupe constitué par l'orthophosphate de pipérazine, le pyrophosphate de pipérazine et le polyphosphate de pipérazine.

9. Utilisation d'une composition contenant un phosphate d'amine (A) et un cyanurate de mélamine (B) comme agent ignifuge;
dans laquelle le composant (A) contient les composants (A-1) et (A-2) ci-dessous:
le composant (A-1) étant au moins un sel de mélamine choisi dans le groupe constitué par l'orthophosphate de mélamine, du pyrophosphate de mélamine et du polyphosphate de mélamine; et
le composant (A-2) étant au moins un sel de pipérazine choisi dans le groupe constitué par l'orthophosphate de pipérazine, le pyrophosphate de pipérazine et le polyphosphate de pipérazine.
